Europäisches Patentamt

European Patent Office

Office européen des brevets

(19)

(11) EP 0 628 347 B1

(12) FASCICULE DE BREVET EUROPEEN

(45) Date de publication et mention
de la délivrance du brevet:
**28.04.1999 Bulletin 1999/17**

(51) Int. Cl.⁶: **B01J 37/20**

(21) Numéro de dépôt: **94401248.3**

(22) Date de dépôt: **06.06.1994**

(54) **Nouveau mode de présulfuration de catalyseur**

Neues Verfahren zur Presulfidierung von Katalysatoren

New process for presulfurizing catalysts

(84) Etats contractants désignés:
**BE DE ES GB IT LU NL**

(30) Priorité: **14.06.1993 FR 9307230**

(43) Date de publication de la demande:
**14.12.1994 Bulletin 1994/50**

(73) Titulaire:
**EUROPEENNE DE RETRAITEMENT DE
CATALYSEURS (en abrégé EURECAT)
F-07800 LA VOULTE SUR RHONE (FR)**

(72) Inventeurs:
• **Dufresne, Pierre
  F-26000 Valence (FR)**
• **Brahma, Nilanjan
  F-07800 La Voulte sur Rhone (FR)**
• **Murff, Stephen R.
  Houston, Texas 77507 (US)**

(74) Mandataire: **Andreeff, François
  INSTITUT FRANCAIS DU PETROLE
  4, avenue de Bois-Préau
  92502 Rueil-Malmaison (FR)**

(56) Documents cités:
**EP-A- 0 506 206          EP-A- 0 517 555
US-A- 4 725 569**

**Description**

Le principe de la présulfuration de préférence hors-site des catalyseurs de conversion d'hydrocarbures et notamment d'hydrotraitement et d'hydrodésulfuration est de fixer un composé sulfuré sur le solide avant son chargement dans le réacteur de l'unité catalytique. Ce principe est décrit notamment dans les brevets de la demanderesse US-A-4719195 et EP-A-448.435. Ainsi lors de l'étape de démarrage du réacteur, ce composé sulfuré pourra se décomposer et venir sulfurer de manière rapide et homogène les oxydes des métaux présents à la surface du catalyseur et les transformer en sulfure sous l'action de l'hydrogène utilisé.

Le composé sulfuré est un produit de la famille des polysulfures, soit qu'on ait introduit un polysulfure de type tertiononyl polysulfure par une étape d'imprégnation du catalyseur, soit qu'on ait formé à la surface du solide un polysulfure par réaction de combinaison du soufre élémentaire avec un composé oléfinique, réaction de type vulcanisation (demande de brevet français de la demanderesse n° 92/04.051) publiée sous le numéro FR-A-2 689 420 (EP-A-0 564 317)).

L'étape de démarrage du réacteur consiste en général à chauffer l'unité sous un gaz riche en hydrogène, le treat gas (gaz de traitement), les vitesses d'augmentations de température étant généralement comprise entre 5 et 50 °C/heure.

Lorsque le composé sulfuré est de type polysulfure, il se produit une réaction dans le réacteur entre le soufre et l'hydrogène à des températures généralement comprises entre 100 et 200 °C, pour produire du sulfure d'hydrogène $H_2S$ lequel, à son tour, réagit sur les oxydes des catalyseurs pour les sulfurer. Les réactions peuvent s'écrire comme suit, pour un catalyseur contenant des oxydes de métaux nickel et molyodène :

$$-S- + H_2 \rightarrow H_2S \tag{1}$$

$$MoO_3 + H_2 + 2H_2S \rightarrow MoS_2 + 3H_2O \tag{2}$$

$$NiO + H_2S \rightarrow NiS + H_2O \tag{3}$$

Ce procédé fonctionne bien et permet dans la majorité des cas d'activer des catalyseurs de façon tout à fait optimale. Néanmoins, il est susceptible d'amélioration pour des cas particuliers, notamment deux cas qui sont cités de manière non exhaustive. Le premier concerne des unités catalytiques d'hydrotraitement de coupes pétrolières qui ne sont pas équipées de dispositif de recyclage gaz. Dans ce cas au cours de l'étape d'activation sous hydrogène à température croissante, une certaine quantité d'$H_2S$ va se former qui ne sera pas captée par les métaux. Cette quantité est faible, de l'ordre de quelques pour cent de soufre par rapport au poids de soufre total introduit. Une première parade pour limiter les effets de cette perte est d'introduire au départ des quantités de soufre légèrement supérieures à ce qui est strictement nécessaire stoechiométriquement. Néanmoins, l'absence de recyclage de gaz a pour conséquence que le catalyseur est constamment alimenté par un gaz dépourvu d'$H_2S$ et qu'à haute température, par exemple 250, 300 ou 350 °C, c'est-à-dire bien après le phénomène de décomposition du composé sulfuré, la pression partielle d'$H_2S$ dans la porosité du catalyseur devient très faible. Or, la dernière étape de formation de la phase active, qui est une recristallisation des espèces impliquant une migration des atomes, nécessite d'être effectuée avec une pression partielle d'$H_2S$ non nulle.

Le deuxième cas où la technique conventionnelle est perfectible est celui de l'activation des catalyseurs à base de nickel et tungstène. Le tungstène a en effet une chimie voisine de celle du molybdène, mais présentant néanmoins de légères différences ; notamment dans notre cas, la cinétique de formation de la phase active de type NiS, $WS_2$ est plus lente que pour le couple NiS, $MoS_2$. En conséquence, la température finale de la phase d'activation qui est typiquement comprise entre 300 et 350 °C par les catalyseurs à base de molybdène, doit être idéalement de 350 à 400 °C pour le tungstène. A cette température, une absence d'$H_2S$ a des conséquences graves sur la bonne formation de la phase active et dont l'activité du catalyseur, par formation possible d'espèces de type $WO_2$, oxyde de tungstène de valence 4, accompagnée de phénomène de frittage. Donc les catalyseurs à base de nickel et tungstène sont donc difficiles à activer correctement lorsque, d'une part, ils sont présulfurés par des composés de type polysulfure et, d'autre part, l'unité qui les contient n'est pas équipée de système de recyclage du gaz.

L'objet de l'invention est l'utilisation d'autres types de composé sulfuré dont les températures de décomposition sont bien supérieures à celles des polysulfures afin de générer du sulfure d'hydrogène à des températures typiquement comprises entre environ 200 et 350 °C. Ces nouveaux composés qui pourront être utilisés seuls comme agent de sulfuration sont utilisés selon l'invention avec au moins un autre composé soufré et ils seront de préférence utilisés en mélange avec au moins un composé de la famille des polysulfures. En effet, l'optimum est que une partie du soufre soit déjà libérée sous forme de sulfure d'hydrogène autour d'une température de 150 °C et que le reste soit produit autour de 220 °C (voire 250 °C à 300 °C environ). Ainsi la pression partielle d'$H_2S$ est suffisante sur toute la gamme de température pendant la période d'activation.

2

L'invention concerne ainsi une méthode de présulfuration, de préférence hors-site, d'un catalyseur de conversion d'hydrocarbures, méthode selon laquelle on procède à la présulfuration du catalyseur au moyen d'un mélange renfermant (a) au moins un premier composé sulfuré de point de décomposition T1 inférieur à 220 °C environ et (b) au moins un deuxième composé sulfuré de point de décomposition T2 supérieur à 220 °C environ, voire supérieur à 250 °C (mesures de décomposition déterminées généralement sous pression d'hydrogène).

Le premier composé sulfuré possède en général une structure de type - S-C- ou -S-S-. On peut citer à titre d'exemples non limitatifs les polysulfures organiques, le soufre élémentaire, une association de soufre et d'huile végétale (ou provenant d'une huile de colza) et du soufre associé à une oléfine, c'est-à-dire les composés soufrés revendiqués en tant qu'agent de sulfuration dans les brevets rappelés plus haut US-A-4719195, EP-A-448.435 et FR 92/04051.

Le deuxième composé sulfuré ou agent de sulfuration possède une structure dans laquelle au moins un atome de soufre est relié à au moins un atome d'oxygène. On peut ainsi citer à titre non limitatif les sulfones (alkyl, aryl, alkyl aryl et arylalkyl sulfones) ou sulfoxydes, les acides sulfoniques et leurs dérivés, les sulfates (d'ammonium, etc...), les sulfites (d'ammonium etc...), les sulfolanes et les dérivés des sulfolanes. Comme exemple de sulfoxydes et/ou sulfones, on peut citer le diméthyl sulfoxyde ($CH_3 SO CH_3$), le diéthyl sulfoxyde ($C_2H_5 SO C_2H_5$), le décyl methyl sulfoxyde ($CH_3 SOC_{10} H_{21}$), le dodecylmethyl sulfoxyde ($CH_3 SOC_{12} H_{25}$), le dodecyl hydroxyethyl sulfoxyde ($C_{12} H_{25} SOC_2 H_4OH$), le dimethyl sulfone ($CH_3 SO_2 CH_3$), le sulfolane ($C_4 H_8 SO_2$) les deux derniers étant préférés. Parmi les acides sulfoniques et leurs dérivés, on citera le chlorure de methyl sulfonyle ($CH_3 SO_2 Cl$), l'acide méthane sulfonique ($CH_3 SO_3$ H), le méthane sulfonamide ($CH_3 SO_2 NH_2$), le chlorure d'éthane sulfonyle ($C_2H_5 SO_2 Cl$) et l'acide éthane sulfonique.

Le rapport pondéral entre la quantité de soufre issue du premier composé de type sulfure et celle issue du deuxième composé de type sulfoxyde est comprise entre 100 et 0,5 et de préférence entre 50 et 1.

L'invention concerne également l'utilisation des catalyseurs présulfurés selon les techniques ci-dessus, dans les réactions de conversion et notamment d'hydroconversion d'hydrocarbures. On citera plus particulièrement les hydrodésulfurations et les hydrotraitements, en présence par exemple de catalyseurs à base d'au moins un métal ou composé de métal, choisi dans le groupe constitué par le molybdène, le chrome, le tungstène, le cobalt, le nickel, et plus particulièrement les couples nickelmolybdène et nickel-tungstène, le catalyseur étant utilisé en atmosphère d'hydrogène.

Les exemples ci-dessous illustrent l'invention.

Exemple 1 (comparatif) :

Emploi de ditertiononyl polysulfure comme agent de présulfuration.

On se propose de présulfurer 150 grammes d'un catalyseur d'hydrodésulfuration renfermant en poids 5 % de CoO et 20 % de $MoO_3$ sur support d'alumine. La solution de présulfuration renferme 45 % en volume de TPS 37 (polysulfure organique nommé ditertiononyl polysulfure, commercialisé par ELF Atochem) et 55 % en volume de white spirit, essence lourde dont les points initial et final d'ébullition sont respectivement 150 et 250 °C. L'imprégnation des pores du catalyseur est achevée par cette solution. Le catalyseur est imprégné par cette solution. On porte le solide ainsi imprégné à 140 °C, pendant 2 heures sous une pression de 10 Torr (1333 Pa, soit 13,33 x $10^{-3}$ bars), afin d'évaporer le solvant. Le produit obtenu contient en poids 6,7 % de soufre et 4,9 % de carbone. Ce catalyseur, dénommé par le suite catalyseur A, est caractérisé par D.S.C. (scanner calorimétrique différentiel ou "Differential Scanning Calorimetry). L'activité catalytique est déterminée dans un test d'activité. On présente les résultats et les conditions opératoires dans le tableau 1.

Exemple 2 (comparatif) :

Emploi de soufre élémentaire et d'une huile végétale comme agents de présulfuration.

150 grammes du catalyseur déjà utilisé dans l'exemple 1 est imprégné par une solution qui contient 13 grammes d'une poudre de soufre élémentaire et 39 grammes d'huile de lin (huile végétale insaturée) en suspension ou dissous dans 65 ml du white spirite utilisé dans l'exemple 1. L'imprégnation des pores du catalyseur est achevée par cette solution. Le solide imprégné est porté à 140 °C sous une pression de 10 Torr (1333 Pa, soit 13,33 x $10^{-3}$ bars) pendant deux heures afin d'évaporer le solvant. Le produit final renferme 6,8 % en poids de soufre et 7,4 % poids de carbone. Ce catalyseur, dénommé catalyseur B, est caractérisé par D.S.C. et son activité est étudiée dans un test dont les conditions opératoires et les résultats sont donnés dans le tableau 1.

Exemple 3 (comparatif) :

L'agent de présulfuration est la diméthylsulfone utilisée seule.

On opère comme dans les exemples 1 et 2 mais avec imprégnation des 150 g de catalyseur par 40 grammes

de diméthylsulfone ($C_2H_6$ $SO_2$, c'est-à-dire un sulfoxyde organique qui renferme en poids 33,4 % de soufre) dissous dans 65 ml du white spirit déjà utilisé ci-dessus. Le produit final contient 6,5 % poids de soufre et 8,2 % poids de carbone. Ce catalyseur, appelé catalyseur C, est également caractérisé par la méthode D.S.C. et son activité catalytique est déterminée par un test dont les conditions opératoires et résultats sont présentés dans le tableau 1.

Exemple 4 (conforme à l'invention) :

Présulfuration effectuée par un mélange de TPS et de diméthylsulfone.

150 grammes du catalyseur déjà utilisé dans les exemples 1 à 3 est imbibé par une solution renfermant 20 grammes d'un premier agent de présulfuration qui est le TPS 37 et 20 grammes d'un deuxième agent de présulfuration qui est la diméthylsulfone, ce mélange des deux agents de présulfuration étant dissous dans 65 ml de white spirit. L'imprégnation des pores du catalyseur se réalise comme dans les exemples précédents. Le solvant est ensuite évaporé en traitant le catalyseur à 140 °C sous 10 Torr (1333 Pa soit 13,33 x $10^{-3}$ bars) pendant deux heures. Le catalyseur obtenu, appelé catalyseur D, renferme 6,8 % poids de soufre et 6,6 % poids de carbone et est caractérisé par D.S.C. et son activité catalytique est testée les conditions opératoires et résultats apparaissent dans le tableau 1.

Exemple 5 (conforme à l'invention) :

On répète l'exemple précédent en utilisant ici 75 grammes de TPS 37 au lieu de 20 grammes dans l'exemple 4 et 4 grammes de diméthylsulfone au lieu de 20 grammes dans l'exemple 4. Le catalyseur obtenu, catalyseur E, renferme 7,3 % poids de soufre et 7,2 % poids de carbone. Les résultats des tests obtenus avec le catalyseur E se trouvent également portés dans le tableau 1.

Exemple 6 (exemple selon l'invention) :

Présulfuration effectuée par un mélange d'huile de lin, de soufre élémentaire et de diméthylsulfone. On traite 150 grammes du catalyseur déjà utilisé dans les exemples précédents par une solution qui renferme un premier agent de présulfuration qui lui même est un mélange de 12 grammes de poudre de soufre élémentaire et de 36 grammes d'huile de lin et un deuxième agent de présulfuration qui consiste en 4 grammes de diméthylsulfone. Les agents de présulfuration sont dissous dans 65 ml de white spirit. Lorsque l'imprégnation des pores du catalyseur est achevée, le solvant est évaporé, comme dans les exemples précédents, en portant le catalyseur à 140 °C pendant deux heures sous une pression de 10 Torr (1333 Pa). Le catalyseur final, appelé catalyseur F, renferme 7,3% poids de soufre et 7,2 % poids de carbone. Son activité est testée, comme pour les autres catalyseurs A à E ; les résultats sont donnés dans le tableau 1.

On indique dans le tableau 1 par le symbole X, et pour chaque catalyseur, s'il y a utilisation d'au moins un agent de présulfuration dont la température de décomposition T1 est inférieure à 220 °C.

De même, on indique, par le symbole Y, dans ce même tableau, s'il y a utilisation pour chaque catalyseur, d'au moins un agent de présulfuration dont la température de décomposition T2 est supérieure à 220 °C. On sait que selon l'invention, il convient d'utiliser pour la présulfuration un mélange d'au moins un agent dont la température de décomposition est inférieure a 220 °C (symbole x) et d'au moins un agent dont la température de décomposition est supérieure à 220 °C (symbole y). Les catalyseurs D, E et F sont donc conformes à l'invention puisque les deux types d'agent sont utilisés simultanément pour présulfurer le catalyseur.

Les conditions expérimentales du D.S.C. permettant de déterminer la température de décomposition des agents de sulfuration sont les suivantes :

Equipement : Setaram C80
Vitesse de chauffe : 0,5 °C par minute
Pression d'hydrogène : 30 bars.

Le test d'activité des catalyseurs A à F est donné dans le cadre d'une hydrogénation du toluène. La charge contient 2 % en volume de thiophène, 20 % volume de toluène et 78 % en volume de cyclohexane. On opère sous 60 bars avec une LHSV (liquid hourly space velocity) égale à 2 volumes de charge par volume de catalyseur et par heure. On opère à 350 °C.

4

TABLEAU 1

| Catalyseur | D.S.C. T1 < 220 °C | D.S.C. T2 > 220°C | Hydrogénation du Toluène Activité volumique relative |
|------------|--------------------|-------------------|-------------------------------------------------------|
| A | x | | 100 |
| B | x | | 100 |
| C | | y | 95 |
| D | x | y | 115 |
| E | x | y | 120 |
| F | x | y | 125 |

Les catalyseurs D, E et F donnent les meilleurs résultats dans les tests effectués. L'incorporation dans le catalyseur d'un agent de sulfuration de haut point de décomposition prolonge l'activité du catalyseur utilisé, mais à la condition qu'un agent de présulfuration classique (TPS ou soufre élémentaire ou huile de lin) soit également utilisé. L'utilisation seule d'un agent de haut point de décomposition (catalyseur C) ne permet pas l'amélioration escomptée.

**Revendications**

1.  Procédé de présulfuration d'un catalyseur de conversion d'hydrocarbures caractérisé par l'emploi d'un agent de présulfuration contenant (a) au moins un premier composé sulfuré de point de décomposition T1 inférieur à 220 °C et (b) au moins un deuxième composé sulfuré de point de décomposition T2 supérieur à 220 °C.

2.  Procédé selon la revendication 1 dans lequel le dit premier composé sulfuré possède au moins une structure -S-S- ou -S-C-.

3.  Procédé selon la revendication 1 dans lequel le dit deuxième composé sulfuré possède une structure dans laquelle au moins un atome de soufre est relié à au moins un atome d'oxygène.

4.  Procédé selon la revendication 1 dans lequel le dit premier composé sulfuré renferme au moins une structure -S-S- ou -S-C- et le dit deuxième composé sulfuré renferme au moins une structure dans laquelle au moins un atome de soufre en relié à au moins un atome d'oxygène.

5.  Procédé selon la revendication 4 dans lequel le dit premier composé sulfuré est choisi dans le groupe constitué par les polysulfures organiques, le soufre élémentaire, une association de soufre et d'huile végétale, ou provenant d'une huile végétale, et une association de soufre associé à une oléfine et procédé dans lequel le dit deuxième composé sulfuré est choisi dans le groupe constitué par les sulfones telles que alkyl, aryl, alkylaryl et arylalkylsulfones ou sulfoxydes, les acides sulfoniques et leurs dérivés, les sulfates, les sulfites, les sulfolanes et leurs dérivés.

6.  Procédé selon l'une des revendications 1 à 5 dans lequel le deuxième composé soufré est la diméthylsulfone ou le sulfolane.

7.  Procédé selon la revendication 5 ou 6 dans lequel le catalyseur renferme au moins un métal choisi dans le groupe constitué par le molybdène, le nickel, le cobalt et le tungstène.

8.  Procédé selon la revendication 7 dans lequel le catalyseur renferme le couple cobalt molybdène ou nickel-molybdène ou nickel-tungstène.

9.  Procédé selon l'une des revendication 1 à 8 dans lequel le rapport pondéral entre la quantité de soufre issue du premier composé et celle issue du deuxième composé est comprise entre 100 et 0.5 et de préférence entre 50 et 1.

10. Procédé selon l'une des revendications 1 à 9 appliqué à la présulfuration hors-site d'un catalyseur.

**Claims**

1. A presulphuration process for a hydrocarbon conversion catalyst, characterised in that a presulphuration agent is used containing (a) at least one first sulphur compound with a decomposition point T1 of Less than 220°C and (b) at least one second sulphur compound with a decomposition point T2 greater than 220°C.

2. Process according to claim 1 wherein said first sulphur compound contains at least one -S-S- or -S-C- structure.

3. Process according to claim 1 wherein said second sulphur compound has a structure comprising at least one sulphur atom bonded to at least one oxygen atom.

4. Process according to claim 1 wherein said first sulphur compound contains at least one -S-S- or -S-C- structure and said second sulphur compound has a structure comprising at least one sulphur atom bonded to at least one oxygen atom.

5. Process according to claim 4 wherein said first sulphur compound is selected from the group constituted by organic polysulphides, elemental sulphur, a combination of sulphur and vegetable oil, or resulting from a vegetable oil, and a combination of sulphur and an olefin wherein said second sulphur compound is selected from the group constituted by sulphones such as alkyl, aryl, alkylaryl and arylalkyl sulphones or sulphoxides, sulphonic acids and their derivatives, sulphates, sulphites, sulpholanes and derivatives thereof.

6. Process according to any one of claims 1 to 5 wherein the second sulphur compound is dimethylsulphone or sulpholane.

7. Process according to claim 5 or 6 wherein the catalyst contains at least one metal selected from the group constituted by chromium, molybdenum, nickel, cobalt and tungsten.

8. Process according to any one of claims 1 to 7 wherein the catalyst comprises a cobalt-molybdenum, nickel-molybdenum or nickel-tungsten pair.

9. Process according to any one of claims 1 to 8 wherein the weight ratio between the amount of sulphur produced from the first sulphur compound and that from the second sulphur compound is between 100 and 0.5, preferably between 50 and 1.

10. Process according to any one of claims1 to 9 as applied to offsite presulphuration of catalyst.

**Patentansprüche**

1. Verfahren zum Vorschwefeln eines Katalysators zur Umwandlung von Kohlenwasserstoffen, gekennzeichnet durch die Verwendung eines Vorschwefelungsmittels, das (a) wenigstens eine erste schwefelhaltige Verbindung bzw. Sulfidverbindung mit Zersetzungspunkt T1 kleiner als 220°C und (b) wenigstens eine zweite schwefelhaltige Verbindung oder Sulfidverbindung mit Zersetzungspunkt T2 größer als 220°C enthält.

2. Verfahren nach Anspruch 1, bei dem diese erste schwefelhaltige Verbindung wenigstens eine -S-S- oder -S-C- Struktur besitzt.

3. Verfahren nach Anspruch 1, bei dem diese zweite schwefelhaltige Verbindung eine Struktur besitzt, bei der wenigstens ein Schwefelatom mit wenigstens einem Sauerstoffatom verbunden ist.

4. Verfahren nach Anspruch 1, bei dem diese erste schwefelhaltige Verbindung wenigstens eine -S-S- oder -S-C- Struktur umfaßt und diese zweite schwefelhaltige Verbindung wenigstens eine Struktur umfaßt, bei der wenigstens ein Schwefelatom mit wenigstens einem Sauerstoffatom verbunden ist.

5. Verfahren nach Anspruch 4, bei dem diese erste schwefelhaltige Verbindung gewählt ist aus der Gruppe, die gebildet wird durch die organischen Polysulfide, den elementaren Schwefel, eine Zuordnung von Schwefel und pflanzlichem Öl, oder stammend aus einem pflanzlichen Öl, und einer Zuordnung von Schwefel in Zuordnung zu einem Olefin und Verfahren, bei dem diese zweite schwefelhaltige Verbindung gewählt ist aus der Gruppe, die gebildet ist durch die Sulfone wie die Alkyl-, Aryl-, Alkylaryl- und Arylalkylsulfone oder Sulfoxide, die Sulfonsäuren und deren Derivate, die Sulfate, die Sulfite, die Sulfolane und deren Derivate.

6. Verfahren nach einem der Ansprüche 1 bis 5, bei dem diese zweite schwefelhaltige Verbindung Dimethylsulfon oder Sulfolan ist.

7. Verfahren nach Anspruch 5 oder 6, bei dem dieser Katalysator wenigstens ein Metall umfaßt, das aus der Gruppe gewählt ist, welche gebildet wird durch Chrom, Molybdän, Nickel, Kobalt und Wolfram.

8. Verfahren nach Anspruch 7, bei dem dieser Katalysator das Paar Kobalt-Molybdän oder Nickel-Molybdän oder Nikkel-Wolfram umfaßt.

9. Verfahren nach einem der Ansprüche 1 bis 8, bei dem das Gewichtsverhältnis zwischen der aus der ersten Verbindung stammenden Menge an Schwefel und der aus der zweiten Verbindung stammenden zwischen 100 und 0,5 und bevorzugt zwischen 50 und 1 liegt.

10. Verfahren nach einem der Ansprüche 1 bis 9, in Anwendung auf die ex-situ-Vorschwefelung eines Katalysators.